# EUROPEAN PATENT APPLICATION

(11) **EP 2 889 785 A1**
(43) Date of publication of application: **01.07.2015**
(21) Application number: 13306875.9
(22) Date of filing: 26.12.2013
(51) Int. Cl.: G06F 17/30

(54) **Method and apparatus for providing movie script**

(71) Applicant: Thomson Licensing, 92130 Issy-les-Moulineaux (FR)
(72) Inventor: Maetz, Yves, 35576 Cesson-Sévigné (FR); Eluard, Marc, 35576 Cesson-Sévigné (FR); Oisel, Lionel, 35576 Cesson-Sévigné (FR)
(74) Representative: Huchet, Anne

(57) **Abstract**

A method and an apparatus for providing a movie script are provided. The apparatus comprises: a first module (SA) for extracting from a movie script at least one feature of the movie script; and a second module (DM) for determining, in response to a search query, a matching movie script from at least one movie script according to a matching result between the search query and the at least one movie script based on features extracted by the first module (SA) from the at least one movie script. With the method and the apparatus for providing a movie script, on one hand allows a movie script writer can propose a movie script to multiple movie producers, and one the other hand a movie producer is permitted to efficiently find a movie script corresponding to its needs.

## Description

### TECHNICAL FIELD

The present invention generally relates to film production. In particular, the present invention relates to a method and an apparatus for providing a movie script.

### BACKGROUND

The process of film creation is long and complex. One critical issue people are facing while initiating such a project is to find a budget to produce a story. Two parties are involved in that process:
- A script writer whose role is to write a story. The work of a script writer ends up with a movie script.
- A producer (or a studio) whose role is to produce a story. The producer has the budget and is looking for good stories.

However, only a very limited number of movie scripts became movies finally. For example, in the US only, more than 15000 movie scripts are produced every year but only 700 movies are produced. The amount of unused movie scripts laying around is thus growing continuously. On the other side, thanks to the new migration to a digital world, movie creation as well as movie distribution is now moving from the traditional high end Hollywood-like process to a more open, flexible and creative world. Nevertheless, script remains a crucial element for the success of a movie. The situation can be stated as follows: on one hand, more and more scripts are generated, while on the other hand, the number of movies that are created each year is quite stable but is limited and much smaller than the number of scripts available. The bottleneck is the following: writers and producers need to find themselves in order to start a movie project. This is not easy today. They are different ways for that to happen:
- Producers receive new scripts continuously, sent in by writers that are looking for budget. Some of these scripts are being read by professional script readers, evaluated and in some case get produced. However it is a huge task to read all of them and a producer might miss a very good opportunity in the amount of incoming scripts. Sometimes, a writer knows a producer and the producer agrees directly to read this new script and sometimes to produce the story, bypassing this hazardous process.
- When a producer has a precise idea of a movie, he can hire a writer that will write the script. This process is not immediate and usually takes at least half a year (sometimes much longer) to succeed. This happens quite frequently. It is the case for example when the story has to be inspired from a book or a particular event, or "franchise titles" where the new movie is the sequel of a previous one (E.g. Shrek, Spiderman, Fast and furious, etc.).

The Black List (http://blcklst.com/) compiles a list of the "most liked" unproduced screenplays according to the opinions of studio and production executives and their readers. These scripts have been filtered out manually by producers out of the mass of incoming scripts. However due to limited budgets, they cannot produce every movie they want. A dedicated service of The Black List allows any script writer to add his script to the list, for a monthly fee. Optionally, the script may be read and evaluated manually by a professional reader. The result of this evaluation will be a quote between 1 and 10. This number is the only criteria that a producer can use to select scripts to read: "get me some scripts with an evaluation higher than 8 or get the 10 scripts with highest evaluation. If the number is too low, it will probably never get read by a producer whereas the evaluation is manual and therefore somehow subjective.

Worldwide Motion Picture Group offers a service of script evaluations for up to $20,000 that combines data gathered from manual analysis by a script expert, extensive focus group and customer survey research to determine which elements in a script deliver the best box office return (source http://www.nytimes.com/2013/05/06/business/media/solving-equation-of-a-hit-film-script-with-data.html).

There is a need for a solution to find the relevant subset of movie scripts in a set of movie scripts inputted by movie script writers and then provide the found movie scripts to a movie producer. This solution on one hand allows a movie producer to efficiently find a new movie script corresponding to his criteria and on the other hand allows a script writer to propose his script to multiple producers, therefore get more chances to be produced.

### SUMMARY

The invention provides a method and apparatus for providing a movie script, which on one hand allows a movie script writer to propose a movie script to multiple movie producers, and one the other hand permits a movie producer to efficiently find a movie script corresponding to its needs.

According to one aspect of the invention, an apparatus for providing a movie script is provided. The apparatus comprises: a first module (SA) for extracting from a movie script at least one feature of the movie script; and a second module (DM) for determining, in response to a search query, a matching movie script from at least one movie script according to a matching result between the search query and the at least one movie script based on features extracted by the first module (SA) from the at least one movie script.

According to one aspect of the invention, a method for providing a movie script is provided. The method comprises: receiving at least one movie script from a first party; receiving a search query for a movie script from a second party; determining a matching movie script from the at least one movie script according to a matching result between the search query and the at least one movie script based on at least one feature of the at least one movie script; and providing the matching movie script to the second party.

According to one aspect of the invention, a computer program product downloadable from a communication network and/or recorded on a medium readable by computer and/or executable by a processor is provided. The computer program product comprises program code instructions for implementing the method according to one aspect of the invention.

According to one aspect of the invention, a Non-transitory computer-readable medium comprising a computer program product recorded thereon and capable of being run by a processor is provided. Non-transitory computer-readable medium includes program code instructions for implementing the method according to one aspect of the invention.

It is to be understood that more aspects and advantages of the invention will be found in the following detailed description of the present invention.

### BRIEF DESCRIPTION OF THE DRAWINGS

The accompanying drawings are included to provide further understanding of the embodiments of the invention together with the description which serves to explain the principle of the embodiments. The invention is not limited to the embodiments.

In the drawings:
Figure 1 is a block diagram showing a system to provide a movie script selected from a set of movie scripts according to an embodiment of the invention;
Figure 2 is an exemplary diagram showing an example of a user interface which is used by a script writer to input a new movie script;
Figure 3 is an exemplary diagram showing an example of features for a set of movie scripts as elements of the NSDB module;
Figure 4 is an exemplary diagram showing a textual representation in a simplified version in the NSDB module;
Figure 5 is an exemplary diagram showing a screen shown to a script writer when uploading a new movie script;
Figure 6 is an exemplary diagram showing the features for a set of produced movie scripts in a simplified version as elements of the PMDB module;
Figure 7 is an exemplary diagram showing a set of data stored in the PMDB module;
Figure 8 is an exemplary diagram showing the process for a DM module to determine at least one matching movie script and provide the determined movie script to a movie producer;
Figure 9a is an exemplary diagram showing an example of user interface that is used by a movie producer to enter a direct query;
Figure 9b is an exemplary diagram showing an example of user interface that is used by a movie producer to enter an indirect query; and
Figure 10 is a flow chart showing the process a method for providing a movie script from a movie script writer to a movie producer according to an embodiment of the invention.

### DETAILED DESCRIPTION

An embodiment of the present invention will now be described in detail in conjunction with the drawings. In the following description, some detailed descriptions of known functions and configurations may be omitted for conciseness.

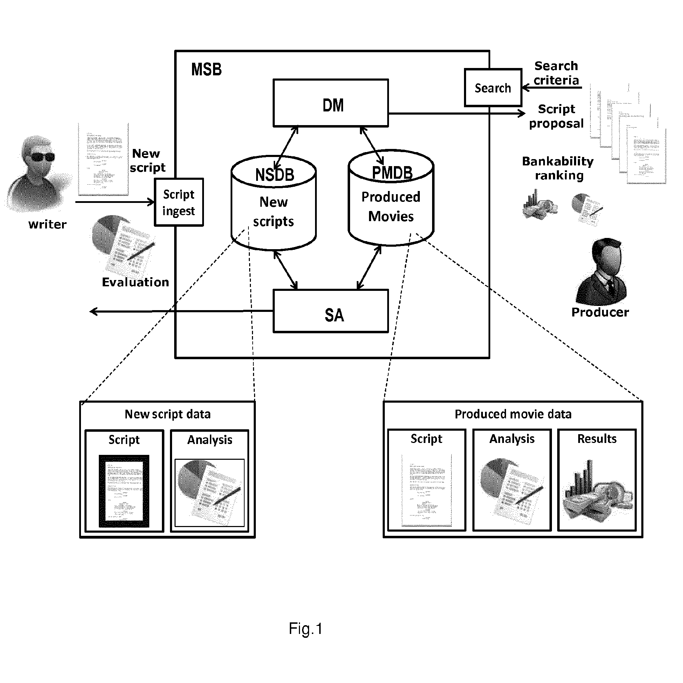

Figure 1 is a block diagram showing a system to provide a movie script selected from a set of movie scripts according to an embodiment of the invention.

As shown in Figure 1, the system, which is called a movie script broker (MSB) system in this embodiment, comprises a script analyzer (SA) module for analyzing a movie script to extract at least one feature of the movie script. Simple features that are extracted from a movie script can be the number of scenes, characters, extras, locations, length of dialogs, split of dialogs between main characters, ratio of external vs internal scenes, ratio between actors' genders, rhythm of the movie, and level of interaction between dialogs, etc. More complex feature analysis can also apply to analyze deeper the text to find out the genre and the topic of the movie, the mood for each scene and character, the type of vocabulary used in the dialogs, the complexity of the scenes, and the level of relation between characters, etc. The analysis result is hereafter called a feature.

It should be noted that the script analysis can be performed to any movie scripts inputted to the MSB system, which can comprise not only a new movie script provided to the system from a script writer but also a script of an existing movie (and potentially updated continuously with new data from the movie industry).

The MSB system further comprises a database for new movie scripts inputted from script writers, indicated as NSDB module in Figure 1. The NSDB module can be built by accumulating new proposals of movie scripts from script writers. The MSB system can provide a user interface for a script writer which logs on the system to input/upload a new movie script into the system, as generally shown in the block at the bottom left of the Figure 1.

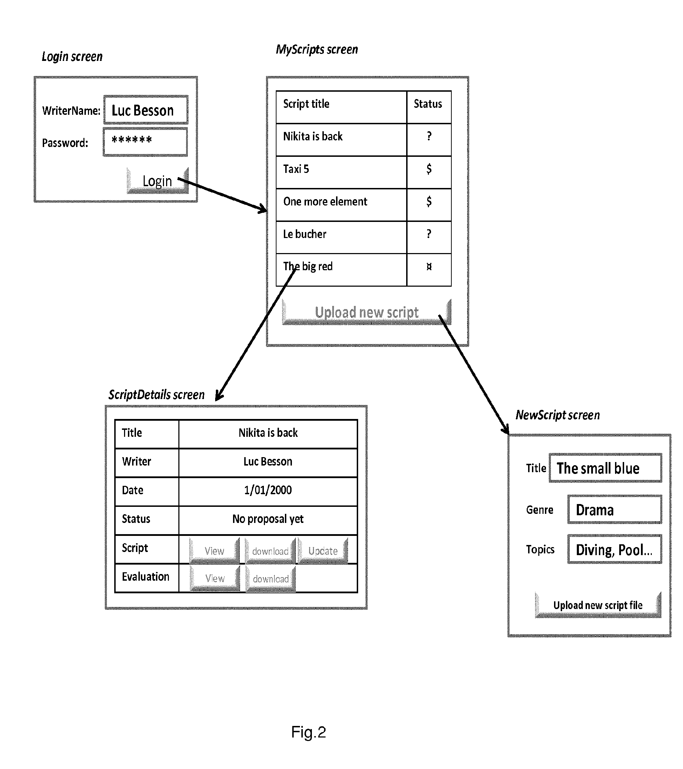

A more detailed example of a user interface for a script writer to input a movie script is shown in Figure 2. Figure 2 is an exemplary diagram showing an example of a user interface which is used by a script writer to input a new movie script. As shown in Figure 2, after the script writer gets authentication, a list of movie script proposals of a script writer is shown, providing the status for each of the proposals in the list. In the user interface shown in Figure 2, the indicator '?' indicates that no proposition has been done, '$' indicates that this movie has been selected, '¤' indicates that the analysis of the script is not yet completed. The user interface can also display other indicators which display how many times the script matches a query of a producer (this process will be described later), which rank it got, etc. When selecting one of the movie scripts, some details of the selected movie script are shown. And the script writer can view the movie script, download it or upload a new version of the movie script. The user interface also allows the script writer to upload a new movie script proposal and to provide some extra data.

An inputted new movie script will be analyzed automatically by the SA module to extract one or more features, and the result can also be stored in the NSDB module.

The NSDB module of new movie scripts contains, for each movie script proposal, not only the movie script itself, but also some extra data of the movie script, such as the name of the writer, the title of the movie script, the data of upload, the genre, etc. The extra data can be provided by the movie script writer who provides the movie script to the system.

An evaluation can be made by the SA module. The evaluation result can be provided to the movie script writer in a proper manner. For example, the evaluation result can be displayed on the screen of the user's terminal device when it logs on. Alternatively, a separate report file can be sent to the script writer.

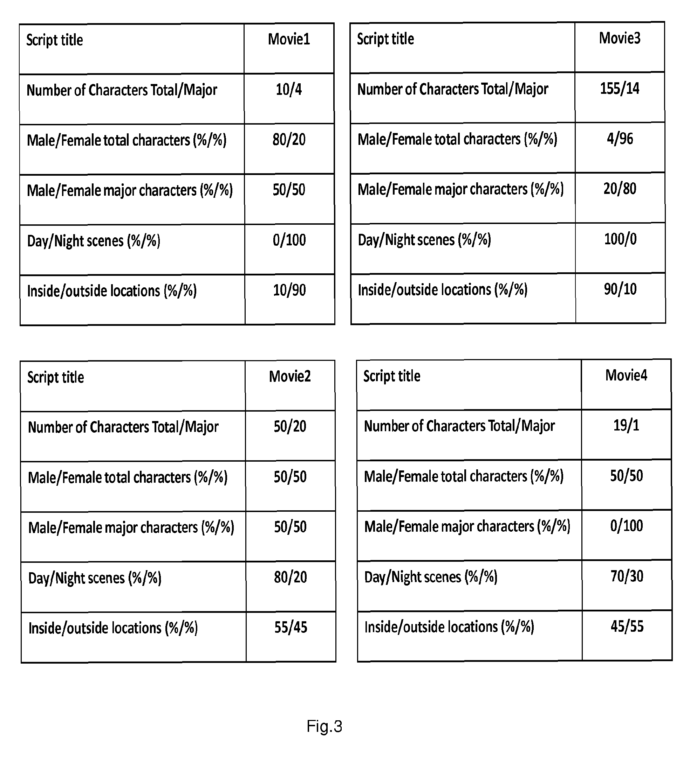

Figure 3 is an exemplary diagram showing an example of features for a set of movie scripts as elements of the NSDB module. In this example, for illustrative purpose, a set of simple features is shown for four movie scripts. These feature which can be extracted automatically by the SA module from the movie script. In this set of four movie scripts, some differences can easily identified from the extracted features. For example the movie 1 is occurring at night in outside location whereas movie 3 is the opposite. These simple feature set allows to map each movie into a highly dimensional space. More complex feature sets will include much more individuals, some of which however will be quite complex to compute.

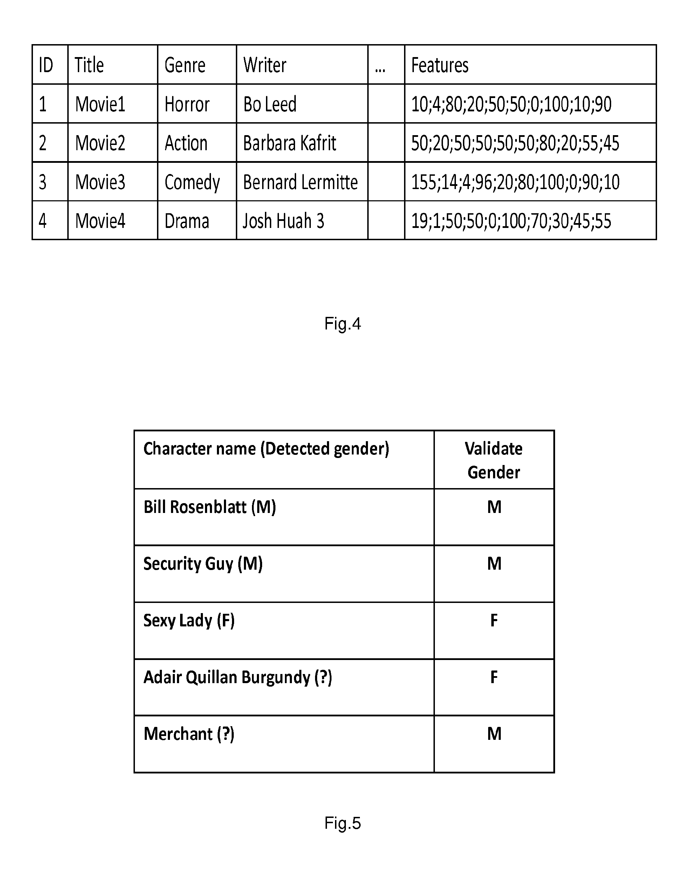

Figure 4 is an exemplary diagram showing a textual representation in a simplified version in the NSDB module. As shown in Figure 4, the textual representation includes four entries, each of which was allocated with a unique ID for representation in the NSDB module. For each entry, the features of the title, the genre, the writer and the features which have been computed by the SA module when inputting each movie script are shown by the textual representation. Some other extra features are not shown here in Figure 4, such as the language.

Figure 5 is an exemplary diagram showing a screen shown to a script writer when uploading a new movie script. It allows the SA module to request for manual validation of a feature by the writer. A typical example illustrated in Figure 5 is about automatic detection of actor gender. The use of a name dictionary can provide an automatic detection for the most common names. But for ambiguous or rare names, no decision can be taken automatically. In such case it can either decide to tag the character as "undefined gender" or to ask some manual help from the writer at the upload of a new script. The screen shown in Figure 5 is used to validate the gender of a character which has been automatically detected during the analysis by the SA module. It allows the writer to correct errors or provide the correct data when the MSB system cannot automatically determine the gender.

Please go back to Figure 1, the MSB system further comprises a database of produced movies, indicated as PMDB module in Figure 1. The PMDB module stores not only the scripts of movies which have already been produced but also all kind of extra data related to these movies. The extra data can include the genre, the box office results, the budget, the casting, the director, and the location, etc. It can also store the features of each movie script, obtained from the script analysis by the SA module. The extra data can be obtained from multiple information sources: public internet movie databases such as IMDB which includes descriptive information, such as the gender, the name of actors and crew, etc. For example, BoxOfficeMojo provides budget-related data and movie attendance statistics. In addition, some information can also be entered manually into the PMDB module using traditional database front-end user interfaces. In one example, the PMDB module can be built manually by a service operator which determines the set of movies to be included.

All movie scripts and relevant data in the PMDB module will be analyzed automatically by the SA module to extract at least one feature and the result will also be stored in the PMDB module. The evaluation result can be provided to the movie producer in a proper manner, as generally shown in the block at the bottom right of the Figure 1.

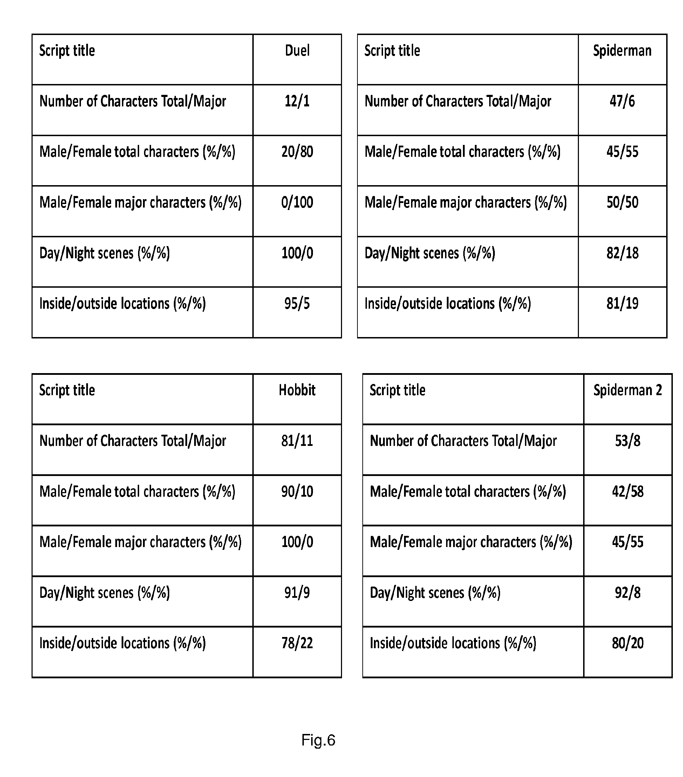

Figure 6 is an exemplary diagram showing the features for a set of produced movie scripts in a simplified version as elements of the PMDB module. Four movie scripts are shown in Figure 6. Similarly to features of movie scripts in the NSDB module, some differences and similarities can be spotted. For example, the movies Spiderman 1 and Spiderman 2 have very similar features.

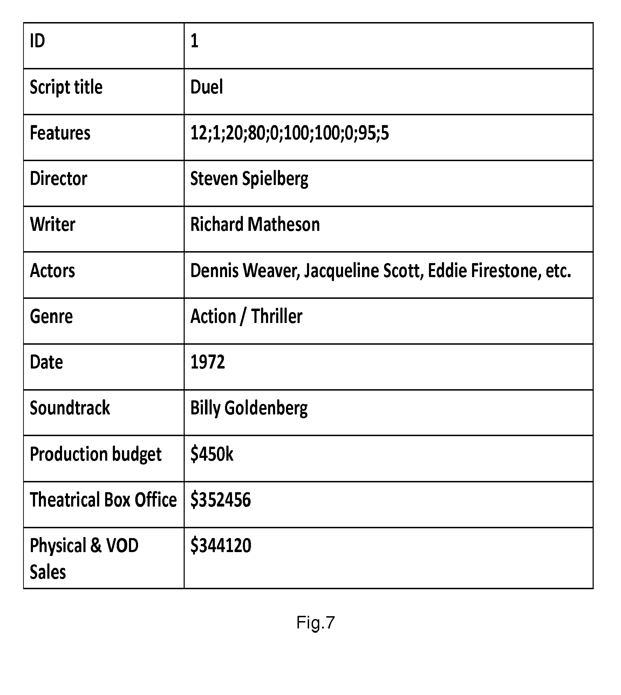

Figure 7 is an exemplary diagram showing a set of data stored in the PMDB module. The data in Figure 7 includes data that have been manually entered by the user, features that have been automatically extracted by the SA module from the movie scripts, and data that have been automatically gathered from multiple information sources.

As described above, all movie scripts are analyzed and the resulting features are stored along with the movie scripts, either in the NSDB module for inputted new scripts or in the PMDB module for scripts of produced movies.

Please go back to Figure 1, the MSB system further comprises a decision module (DM) for determining, in response to a search query from a movie producer, at least one matching movie script from the NSDB module based on features of the NSDB module and/or the PMDB module. The MSB system can provide the at least one matching movie scripts to the movie producer according to a proper sorting and ordering criteria.

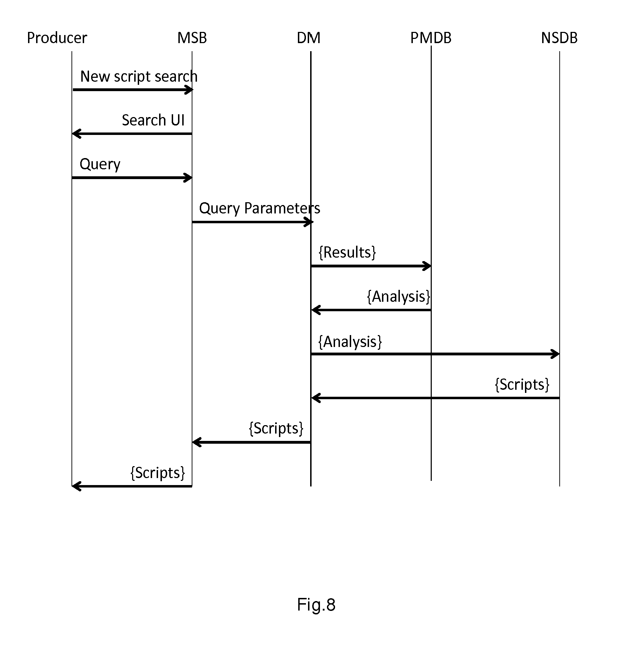

Figure 8 is an exemplary diagram showing the process for a DM module to determine at least one matching movie script and provide the determined movie script to a movie producer.

As shown in Figure 8, the movie producer can request for a new script search to the MSB system which will then provide a search UI to the movie producer to input its search query. The DM module will determine a list of matching movie scripts according to the query parameters based on the extracted features in the NSDB module and/or the PMDM module. The determined matching movie scripts can be provided to the movie producer in a proper manner.

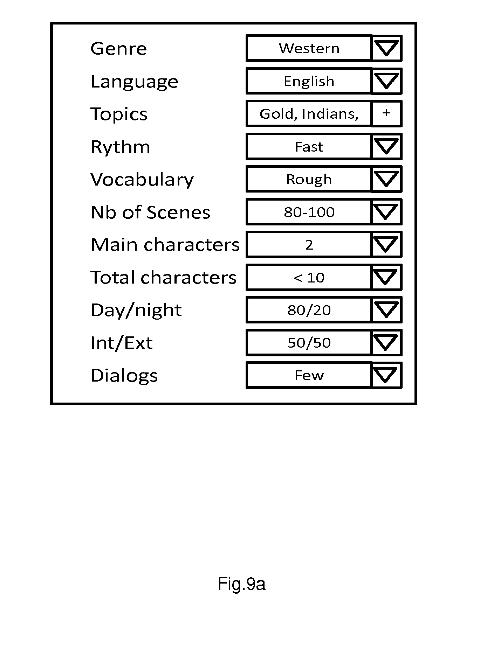

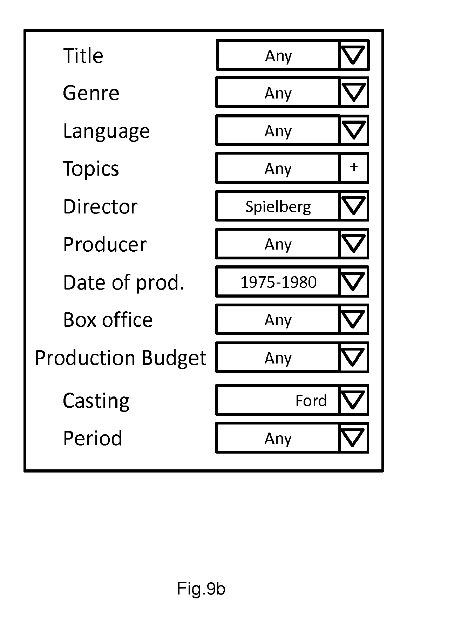

Next, a detailed description will be given to the process for a DM module to determine and provides matching movie scripts with reference to Figures 9a and 9b.

According to the embodiment of the invention, a movie producer can search for movie scripts with the MSB system by entering either direct queries or indirect queries.

A direct query only requires an access of the NSDB module. This is the case for queries that address elements resulting directly from the script analysis. Example of such query is "Western, 2 main characters, mostly external scenes, violent language, fast rhythm, sad mood". The matching process can be performed by comparing the features associated to each movie script of the NSDB module to the query performed by the movie producer. To do so, a metric can be defined to provide a distance value between the above features. The system will output a sorted list of script ordered from the most similar to the less one.

Figure 9a is an exemplary diagram showing an example of user interface that is used by a movie producer to enter a direct query. These queries cover the case where the producer knows exactly the major characteristics of the wanted movie scripts. Therefore, the movie producer can tune some filtering parameters that are directly related to the features of a script and eventually to the general extra data such as genre. For example, the movie producer can have a query for movies with a majority of external night scenes with very small set of actors. Such query will not use the PMDB module but will be based only on the information in the NSDB module.

Indirect queries can be understood as "queries by example". In a first step and before querying the NSDB module, the DM module will build a list of movies selected from the PMDB module according to a query of the movie producer. The query of the movie producer can take different forms: a set of criteria, a list of movies or even a new script. When the movie producer provides some search criteria, the DM module queries the PMDB module with these criteria to obtain a list of matching movies. Example of such queries are "movies that made more than $100M profit with a production budget less than $10M" or "Comedy with Jean Dujardin". The movie provider can also select directly a list of movies from the PMDB module. Example of such queries are "Ironman, Ironman 2, Ironman 3, Superman, Avengers, ...". Finally, the movie producer may also provide a movie script as example, typically a movie script which has not yet been registered into the PMDB module. In this case, the movie script is first analyzed, and extra data are gathered from external sites. And then the new movie is added to the PMDB module. These different query alternatives result in building a list of selected movies from the PMDB module. The DM module will then get the features of all those selected movies and aggregate them together. This set of features is hereafter named the target feature. Then the DM module will query the NSDB module with this target feature and get a ranked list of scripts that match. Any proper well known techniques can be used for this query and no further details will be given in this respect.

Figure 9b is an exemplary diagram showing an example of user interface that is used by a movie producer to enter an indirect query. These queries can cover the case where the movie producer only has a rough idea of what is looked for and wants to find a new movie script which is similar to one or a set of produced movie references. These movie references can be entered by choosing extra data parameters such as the director, the period of production or even the budget or the amount of benefits done. The DM module will query the PMDB module to list the movies that match these parameters. This list of movies gives the list of script features that a new script candidate should match.

As described above, with the MSB system provided by the embodiment of the invention, a movie producer can enter a new script as a query. The MSB system can also be used to detect plagiarism and potentially future litigation in case of similarities. In this case, the movie producer which receives a new script outside the MSB system, using traditional mechanisms, can use the MSB system to check whether this new script is original or not. For that purpose, the movie producer just needs to enter this new script as a query and will be provided with similar scripts. In this specific case, the matching is not only performed regarding the NSDB module but also on the PMDB module. Then a simple comparative reading of the matching scripts can help the movie producer to determine of the originality of the movie script. In addition, the MSB system can also be used as a comparison tool with previous productions. For example, when a producer wants to produce a sequel of a franchise title which already had numerous versions, it can use the MSB during the writing process to verify that the new script is close enough to the previous ones, or on the opposite sufficient differentiate from the previous ones.

As described above, an embodiment of the invention provides a solution which on one hand allows a movie script writer to propose a movie script to multiple movie producers, and one the other hand permits a movie producer to efficiently find a movie script corresponding to its needs.

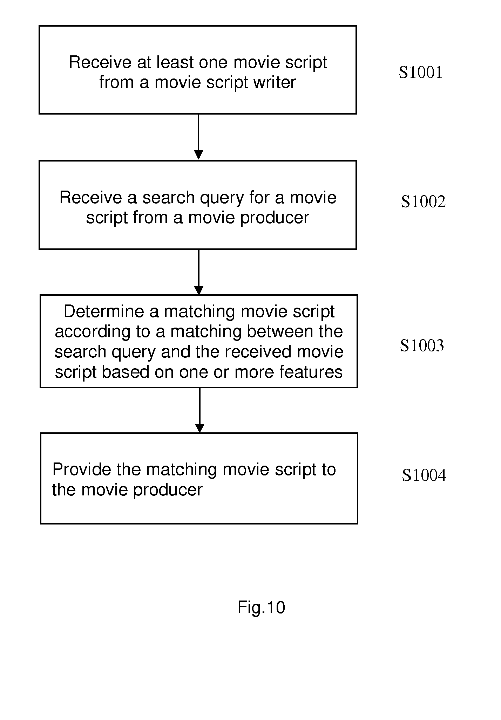

Figure 10 is a flow chart showing the process a method for providing a movie script from a movie script writer to a movie producer according to an embodiment of the invention.

As shown in Figure 10, at step S1001, it receives at least one movie script from a movie script writer. Movie script from various movie script writers can build a database of new movie scripts.

At step S1002, it receives a search query for a movie script from a movie producer.

At step S1003, it determines a matching movie script from the at least one movie script according to a matching between the search query and the at least one movie script based on one or more features of the at least one movie script.

At step S1004, it provides the matching movie script to the movie producer.

As described above, the relevant data of a movie script can also received from the movie script writer for determining the at least one feature of the movie script.

In addition, at least one movie script of produced movies can also be received. In this case, it can also receive the relevant data of the movie script of produced movies. The movie script of produced movies and the relevant data can be obtained from multiple information sources, including the movie producer. Features extracted from at least one movie script of produced movies can be used for determine the matching between the search query and a movie script.

The matching movie scripts can be provided to the movie producer. If there is more than one matching movie scripts, they can be provided to the movie producer in an order of a similarity degree of the matching.

It is to be understood that the present invention may be implemented in various forms of hardware, software, firmware, special purpose processors, or a combination thereof. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method depicted in the accompanying figures are preferably implemented in software, the actual connections between the system components (or the process) may differ depending upon the manner in which the present invention is programmed. Given the teachings herein, one of ordinary skill in the related art will be able to contemplate these and similar implementations or configurations of the present invention.

## Claims

1. An apparatus (MBS) for providing a movie script, comprising:
a first module (SA) for extracting from a movie script at least one feature of the movie script; and
a second module (DM) for determining, in response to a search query, a matching movie script from at least one movie script according to a matching result between the search query and the at least one movie script based on features extracted by the first module (SA) from the at least one movie script.

2. The apparatus (MBS) according to claim 1, further comprising:
the second module (DM) determining the matching between the search query and the at least one movie script in view of features extracted by the first module (SA) from at least one movie script of produced movies.

3. The apparatus (MBS) according to claim 2, further comprising:
a third module (NSDB, PMDB) for storing the at least one movie script and at least one feature extracted by the first module (SA) from the at least one movie script and the at least one movie script of produced movies and at least one feature extracted by the first module (SA) from the at least one movie script of produced movies.

4. The apparatus (MBS) according to claim 3, wherein the third module (NSDB, PMDB) provides a user interface for a movie script writer to input a movie script.

5. The apparatus (MBS) according to claim 4, wherein the third module (NSDB, PMDB) provides a user interface for a movie script writer to input relevant data of a movie script which is used for the first module (SA) to extract at least one feature of the movie script.

6. The apparatus (MBS) according to claim 4, wherein the third module (NSDB, PMDB) provides a user interface for a movie producer to input a search query.

7. The apparatus (MBS) according to claim 4, further comprising:
the first module (SA) providing an evaluation result of a movie script to the movie script writer.

8. The apparatus (MBS) according to claim 6, further comprising:
the second module (DM) providing the matching movie script to the movie producer.

9. The apparatus (MBS) according to claim 6, further comprising:
the second module (DM) providing a user interface for the movie producer to input relevant data of a movie script of a produced movie.

10. The apparatus (MBS) according to claim 1, wherein the at least one feature of a movie script comprises the number of scenes, characters, extras, locations, length of dialogs, split of dialogs between main characters, ratio of external vs. internal scenes, ratio between actors' genders, rhythm of the movie, and level of interaction between dialogs, the genre and the topic of the movie, the mood for each scene and character, the type of vocabulary used in the dialogs, the complexity of the scenes, and the level of relation between characters.

11. A method for providing a movie script, comprising:
receiving at least one movie script from a first party;
receiving a search query for a movie script from a second party;
determining a matching movie script from the at least one movie script according to a matching result between the search query and the at least one movie script based on at least one feature of the at least one movie script; and
providing the matching movie script to the second party.

12. The method according to claim 11, wherein the first party is a movie script writer and the second party is a movie producer.

13. The method according to claim 12, further comprising:
receiving relevant data of a movie script from the first party for determining the at least one feature of the movie script.

14. Computer program product downloadable from a communication network and/or recorded on a medium readable by computer and/or executable by a processor, comprising program code instructions for implementing the method according to at least one of claims 11 to 13.

15. Non-transitory computer-readable medium comprising a computer program product recorded thereon and capable of being run by a processor, including program code instructions for implementing the method according to at least one of claims 11 to 13.
